# EUROPEAN PATENT APPLICATION

(11) **EP 0 942 601 A2**
(43) Date of publication of application: **15.09.1999**
(21) Application number: 99103954.6
(22) Date of filing: 09.03.1999
(51) Int. Cl.: H04N 7/173

(54) **Program receiving/storage device**

(30) Priority: 10.03.1998 JP 5855798
(71) Applicant: MATSUSHITA ELECTRIC INDUSTRIAL CO., LTD., Kadoma-shi, Osaka-fu, 571 (JP)
(72) Inventor: Yamaguchi, Tomoko, Nishikamo-gun, Aichi-ken (JP)
(74) Representative: Altenburg, Udo, Dipl.-Phys.

(57) **Abstract**

A receiving/recording portion 31 stores program data continuously broadcast from a program broadcast device 2 in a storage device 32. A server managing portion 33 generates managing information for managing each set of program data and registers in a program managing DB 331. A terminal 4 specifies program data to be viewed and its view time and transmits a reservation command to a video server 3. The server managing portion 33 generates reservation managing information based on the received reservation command and registers in a reservation managing DB 333. The server managing portion 33 controls the program data specified by the terminal 4 based on the reservation managing information and the data managing information to be transmitted to the terminal 4 at the specified time. Therefore, a program receiving/storage device including the above structure can construct an environment in which user can watch a desired program at his/her convenient time.

## Description

### BACKGROUND OF THE INVENTION

### Field of the Invention

The present invention relates to program receiving/storage devices, and more specifically to a program receiving/storage device for receiving and storing program data broadcast by a remote transmitting station.

### Description of the Background Art

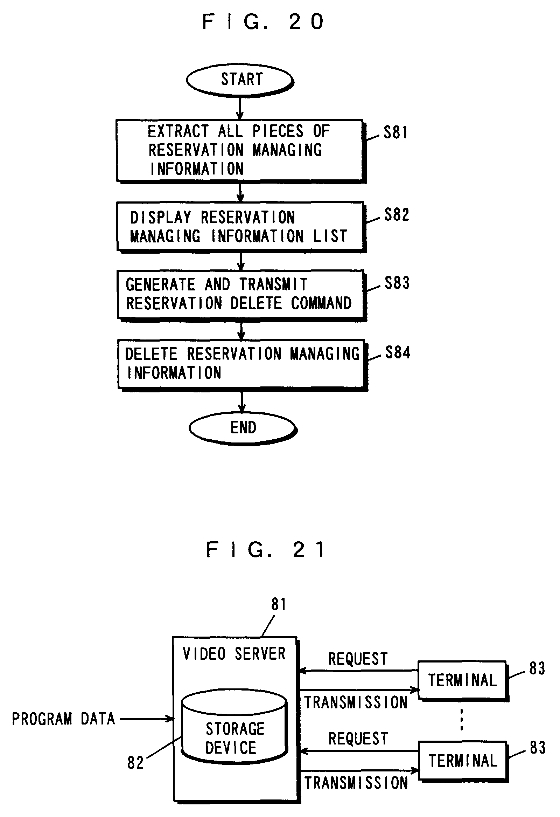

FIG. 21 is a diagram showing an example of the structure of a conventional program broadcast system. In FIG. 21, program data such as television programs transmitted from outside are registered in a storage device 82 in a video server 81. A terminal 83 requests the video server 81 for program data which a user desires to watch. The video server 81 retrieves the requested program data from the storage device 82 and transmits the data to the terminal 83 which made the request. This allows the user to watch the desired television program and the like.

The program data is regularly registered in the video server 81. That is, when the program data is updated and transmitted every month, the program data registered in the storage device 82 is updated every month.

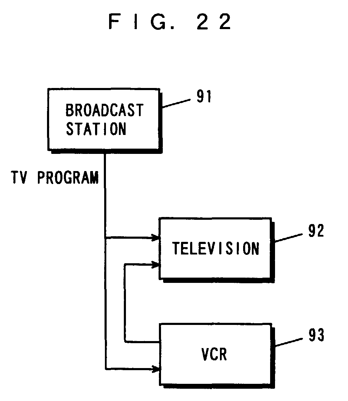

FIG. 22 is a conventional environment in which a user watches television. In FIG. 22, television programs broadcast from a broadcast station 91 are received and displayed by a television 92, and thus provided for the user. When the user cannot watch a desired television program at its broadcast time, the user generally records the program by using a VCR 93 connected to the television 92. This allows the user to watch the desired television program by playing-back the recorded television program at his/her convenient time.

However, in the conventional program broadcast system (refer to FIG. 21), the terminal 83 can disadvantageously request only the program data currently registered in the storage device 82 of the video server 81, and cannot request the video server 81 to provide unregistered program data (program data scheduled to be transmitted a month later, for example).

Furthermore, in the conventional environment for watching television (refer to FIG. 22), television programs are scheduled mainly according to the intentions by the broadcast station 91, which does not necessarily fit each user's needs. In such environment, it has been disadvantageously getting difficult for each user to watch all desired television programs at their broadcast times directly through the television 92. Although recording a television program by the VCR 93 is a solution for the above problem, the user disadvantageously has to reserve the television program before its broadcast time and one or more VCRs 93 are required when the user wants to watch later one or more television programs broadcast at the same time period.

### SUMMARY OF THE INVENTION

Therefore, an object of the present invention is to provide a program receiving/storage device capable of providing an environment in which a user can watch a desired program at a convenient time. The present invention achieves the object by the following first to twentieth aspects.

A first aspect is directed to a program receiving/storage device for receiving and storing program data continuously broadcast from a remote program broadcast device, comprising:
a server; and
a terminal for transmitting a reservation command specifying a set of program data and a view time according to an input from a user;
the server comprising:
a receiving portion for receiving the program data broadcast from the program broadcast device;
a storage device for storing the program data received by the receiving portion;
a server managing portion for managing data managing information of the program data stored by the storage device and reservation managing information generated based on the reservation command transmitted from the terminal; and
a program transmitting portion for transmitting the specified program data stored in the storage device to the terminal according to an instruction of the server managing portion; wherein
the server managing portion instructs, based on the data managing information and the reservation managing information managed thereby, the program transmitting portion to retrieve the specified program data from the storage device and transmit the program data to the terminal; and
the terminal receives the specified program data transmitted by the program transmitting portion and performing reproduction processing of the received program data.

In the first aspect, the terminal instructs the server to provide the program data which the user desires to watch and its use time using a reservation command. The terminal can specify by the reservation command not only the program data already stored in the storage device but also the program data which will be stored in the future, regardless of the presence or absence of the program data in the storage device. The server simultaneously receives at the receiving portion the program data broadcast from the program broadcast device. The server stores the program data received by the receiving portion in the storage device. Further, the server manages the reservation managing information generated based on the reservation command and also manages the data managing information of the program data stored in the storage device. The server transmits the program data at the view time based on the reservation managing information and data managing information. That is, the terminal can receive the program data specified by the reservation command at the view time specified with the reservation command.

As described above, the server simultaneously receives and stores the broadcast program data and also has centralized control of program data transmission to the terminal connected to the server. Therefore, even if the user does not have a plurality of VCRs, the user can construct a viewing environment according to his/her lifestyle by operating the terminal: for example, the user can watch programs in the same time zone, collectively watch programs for one week, and make his/her own program schedule so that only desired programs are transmitted.

According to a second aspect, in the first aspect, the receiving portion further selectively receives only the program data specified by the reservation command by the terminal among the program data broadcast from the program broadcast device.

In the second aspect, only limited program data is stored in the storage device. This allows a storage device with small capacity to be applied to the server.

According to third and fourth aspects, in the first and second aspects, respectively, the server managing portion further deletes the program data stored in the storage device as required.

In the third or fourth aspect, the program data already stored in the storage device is deleted as required. This allows a storage device with small capacity to be applied to the server.

According to fifth to eighth aspects, in the first to fourth aspects, respectively, the terminal comprises:
a terminal managing portion for managing the view time specified by the reservation command generated by the terminal; and
a notifying portion for notifying the user that the server starts transmitting the specified program data at the view time managed by the terminal managing portion.

In the fifth to eighth aspects, the notifying portion notifies the server of start of program data transmission, and therefore the user does not miss the program. This allows usability of the program receiving/storage device.

According to a ninth aspect, in the fifth aspect, the terminal further comprises a display processing portion for performing display processing of the view time managed by the terminal managing portion and making the user refer to the view time.

In the ninth aspect, the display processing portion performs display processing of view time, and therefore the user can check the time for watching the program data reserved by himself/herself. This allows usability of the program receiving/storage device.

According to a tenth aspect, in the fifth aspect, the server managing portion further deletes the reservation managing information managed thereby as required.

In the tenth aspect, the reservation managing information generated based on the reservation command is deleted. When the reservation managing information is deleted, the server does not transmit the program data specified by the reservation command. That is, it is possible to stop transmission of the program data from the server to the terminal. This allows usability of the program receiving/storage device.

An eleventh aspect is directed to a program receiving/storage device receiving and storing program data continuously broadcast from a remote program broadcast device, comprising:
an input device for generating a reservation command specifying a set of program data and a view time according to an input from a user;
a receiving portion for receiving the program data broadcast by the program broadcast device;
a storage device for storing the program data received by the receiving portion;
a managing portion for managing data managing information of the program data stored by the storage device and reservation managing information generated based on the reservation command of the input device; and
a program reproduction processing portion for retrieving the specified program data stored in the storage device according to an instruction of the managing portion and performing reproduction processing of the retrieved program data; wherein
the managing portion instructs, based on the data managing information and reservation managing information managed thereby, the program reproduction processing portion to retrieve the specified program data from the storage device.

In the eleventh aspect, the input device instructs the server to provide program data which the user desires to watch and its use time using a reservation command. The input device specifies the program data by the reservation command, regardless of the presence or absence of the program data in the storage device. The receiving portion simultaneously receives broadcast program data. The storage device stores the program data received by the receiving portion. Further, the managing portion manages the reservation managing information generated based on the reservation command and also manages the data managing information of the program data stored in the storage device. The managing portion instructs, based on the reservation managing information and data managing information, the program reproduction processing portion to perform reproduction processing of the program data at the view time. That is, the user can watch the program data reproduced by the program reproduction processing portion at the view time specified using the reservation command. This allows, as in the first aspect, the user to construct an environment in which a desired program can be watched without a plurality of VCRs.

According to a twelfth aspect, in the eleventh aspect, the receiving portion further selectively receives only the program data specified by the reservation command, which the input device generate, among the program data broadcast from the program broadcast device.

In accordance with the twelfth aspect, as in the second aspect, it is possible to apply a storage device with small capacity to the program receiving/storage device.

According to thirteenth and fourteenth aspects, in the eleventh and twelfth aspects, respectively, the managing portion further deletes the program data stored in the storage device as required.

In accordance with the thirteenth and fourteenth aspects, as in the third and fourth aspects, it is possible to apply a storage device with small capacity to the program receiving/storage device.

According to fifteenth to seventeenth aspects, in the eleventh to thirteenth aspects, respectively, further comprises a notifying portion for notifying the user that the program reproduction processing portion starts reproduction processing of the specified program data.

In accordance with the fifteenth to seventeenth aspects, as in the fifth to eighth aspects, usability of the program receiving/storage device is improved.

According to eighteenth to twentieth aspects, in the eleventh to thirteenth aspects, respectively, the managing portion further deletes the reservation managing information managed thereby as required.

In accordance with the eighteenth to twentieth aspects, as in the tenth aspect, usability of the program receiving/storage device is improved.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing the whole structure of a program receiving/storage device 1 according to a first embodiment of the present invention;
FIG. 2 is a block diagram showing the detailed structure of each terminal 4 of FIG. 1;
FIG. 3 is a diagram for describing a program managing DB 331 and data managing information 332 managed by a server managing portion 33 of FIG. 1;
FIG. 4 is a flow chart showing procedures to be executed when the server managing portion 33 of FIG. 1 or a managing portion 185 of FIG. 18 generates the data managing information 332;
FIG. 5 is a flow chart showing procedures to be executed when each terminal 4 of FIG. 1 generates and transmits a reservation command;
FIG. 6 shows a screen of an input menu 6;
FIG. 7 is a diagram for describing a time managing DB 431 and time managing information 432 managed by a terminal managing portion 43 of FIG. 2;
FIG. 8 is a diagram showing a summary of processing of steps S12 to S14 shown in FIG. 5;
FIG. 9 is a diagram for describing a reservation managing DB 333 and reservation managing information 334 managed by the server managing portion 33 of FIG. 1;
FIG. 10 is a flow chart showing procedures to be executed when the server managing portion 33 of FIG. 1 or the managing portion 185 of FIG. 18 registers the reservation managing information 334;
FIG. 11 is a diagram showing a summary of processing by which the server managing portion 33 of FIG. 1 generates the data managing information 332;
FIG. 12 is a flow chart showing procedures to be executed when the server managing portion 33 of FIG. 1 transmits program data to the terminal 4;
FIG. 13 is a flow chart showing procedures to be executed when the terminal 4 of FIG. 1 receives the program data;
FIG. 14 is a flow chart showing procedures to be executed when the terminal 4 of FIG. 1 deletes the time managing information 432;
FIG. 15 is a flow chart showing procedures to be executed when the server managing portion 33 of FIG. 1 deletes the reservation managing information 334;
FIGS. 16a and 16b are diagrams for describing the reservation managing information 334 when the program data is successively transmitted;
FIG. 17 is a block diagram showing the structure of a program receiving/storage device 1 according to a second embodiment of the present invention;
FIG. 18 is a block diagram showing the whole structure of a program receiving/storage device 18 according to a third embodiment of the present invention;
FIG. 19 is a flow chart showing procedures to be executed when the program receiving/storage device 18 of FIG. 18 reproduces program data;
FIG. 20 is a flow chart showing procedures to be executed when the registered reservation managing information 334 is deleted;
FIG. 21 is an example showing the structure of a conventional program broadcast system; and
FIG. 22 is a conventional environment in which a user watches television.

### DESCRIPTION OF THE PREFERRED EMBODIMENT

### (First embodiment)

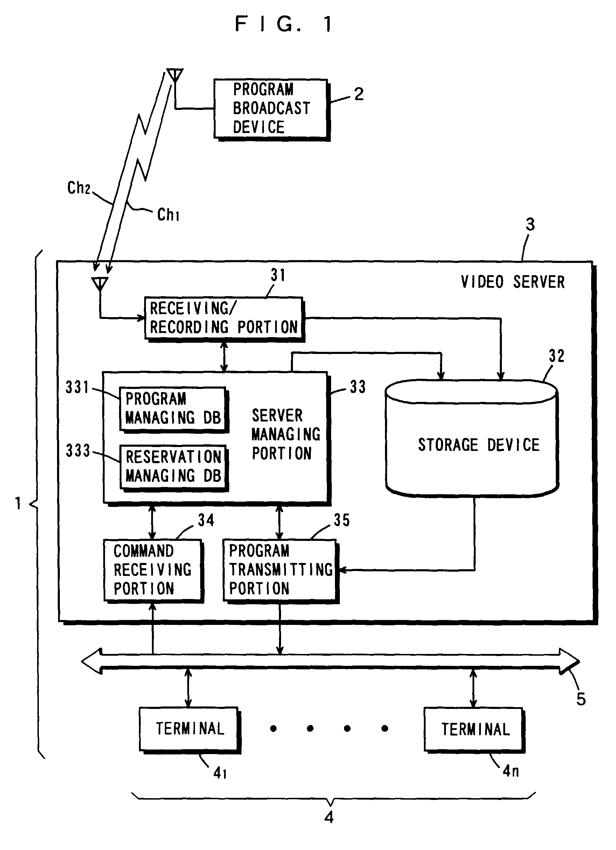

FIG. 1 is a block diagram showing the whole structure of a program receiving/storage device 1 according to a first embodiment of the present invention. In FIG. 1, a program broadcast device 2 is placed remote from the program receiving/storage device 1. The program broadcast device 2 is typically a ground broadcast station, a communications satellite, a broadcast satellite, or a center station for cable television (CATV). The program broadcast device 2 is managed by a television program provider for viewers. The program broadcast device 2 provides program data by broadcasting. The program data is a television program in a data form. Although only one program broadcast device 2 is shown in FIG. 1 for the sake of convenience, a plurality of program broadcast devices 2 may simultaneously broadcast program data to the program receiving/storage device 1.

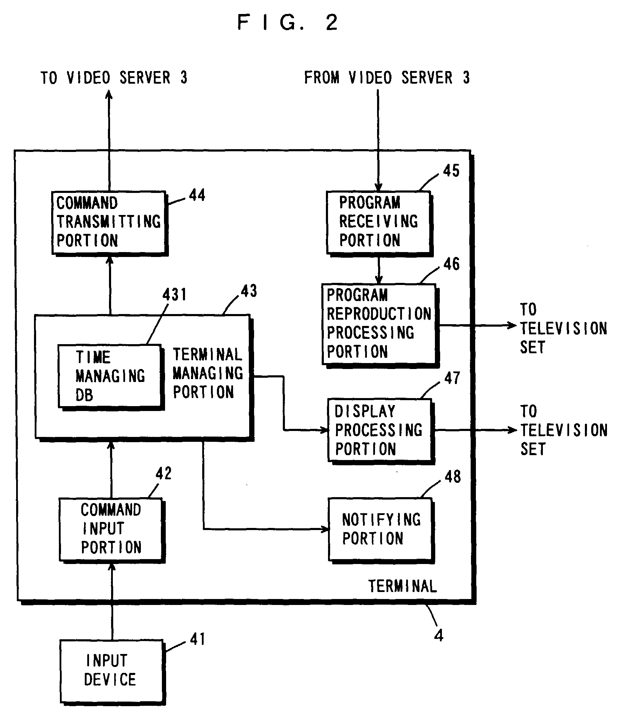

The program receiving/storage device 1 is typically placed in human-living space such as home and office. The program receiving/storage device 1 includes a video server 3 and at least one terminal 4 (n terminals 4₁ to 4ₙ are shown in FIG. 1). The video server 3 and each terminal 4 are connected through a bus 5 so as to bidirectionally communicate each other. The video server 3 includes a receiving/recording portion 31, a storage device 32, a server managing portion 33, a command receiving portion 34, and a program transmitting portion 35. Each terminal 4 includes, as shown in FIG. 2, an input device 41, a command input portion 42, a terminal managing portion 43, a command transmitting portion 44, a program receiving portion 45, a program reproduction processing portion 46, a display processing portion 47, and a notifying portion 48.

Described below is operation of the program receiving/storage device 1. The program broadcast device 2 of FIG. 1 continuously broadcasts program data using broadcast channels to which a unique frequency band is assigned. For example, program data A, B, C, ... are broadcast through a broadcast channel Ch₁, while program data P, Q, R, ... are broadcast through a broadcast channel Ch₂. Assume that information about a broadcast time and a channel ID is added to each set of program data, More specifically, the information about the broadcast time is composed of a broadcast start time and a broadcast end time. Each set of program data is started to be broadcast at a time shown by the broadcast start time. Broadcasting each set of program data is completed at a time shown by the broadcast end time. Further, each program data is broadcast through the broadcast channel specified by the channel ID. The program data may be broadcast not only in such a manner that the programs are updated every month as shown in background art but also that only new program data is continuously broadcast. According to the program receiving/storage device 1, a viewer can reliably watch new program data without missing it.

The program data as described above is broadcast to the program receiving/storage device 1. The receiving/recording portion 31 of the video server 3 includes a receiver ready for the type of the program broadcast device 2. For example, when the program broadcast device 2 is a broadcast satellite, the receiving/recording portion 31 includes a receiver capable of receiving radio waves from broadcast satellites. The receiving/recording portion 31 receives all sets of program data continuously broadcast from the program broadcast device 2.

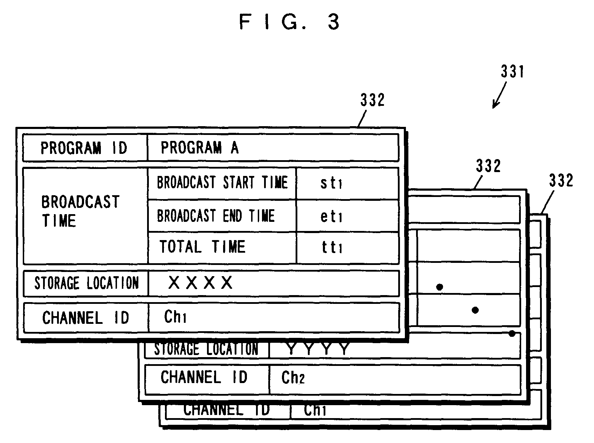

The server managing portion 33 generates managing information 332 of the program data received by the receiving/recording portion 31 and registers in a program managing database (hereinafter referred to as program managing DB) 331 (refer to FIG. 3). As the data managing information 332, information items about a program ID, a broadcast time, a storage location and a channel ID are registered. In FIG. 3, the program ID is information for uniquely specifying program data received by the receiving/recording portion 31 and then stored in the storage device 32 . As the broadcast time, a broadcast start time, a broadcast end time and total time are registered. The broadcast start time and the broadcast end time have been described above. The total time is a time period between the broadcast start time and the broadcast end time. The storage location is information for specifying a location in which the program data is stored in the storage device 32. The channel ID is information showing through which broadcast channel the program data is broadcast. The server managing portion 33 generates and registers the above described data managing information 332 in the program managing DB 331 for each set of program data to manage each set of program data stored in the storage device 32.

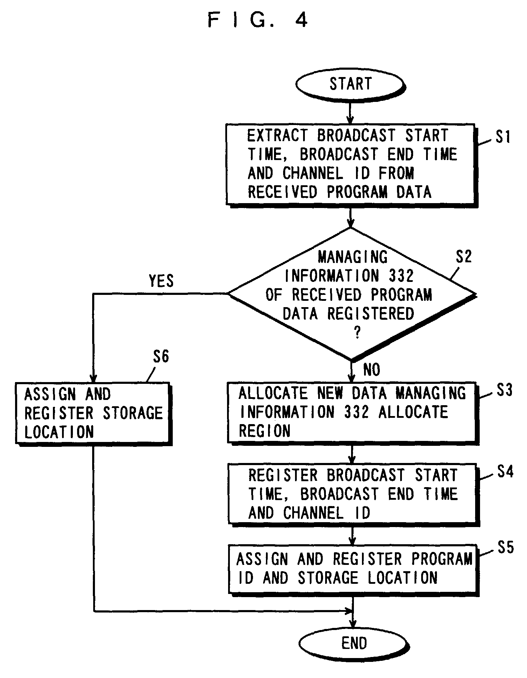

The server managing portion 33 operates according to procedures shown by a flow chart of FIG. 4 to generate the data managing information 332 every time the receiving/recording portion 31 receives program data for one program. That is, the server managing portion 33 extracts the broadcast start time, broadcast end time and channel ID added to the received program data (step S1).

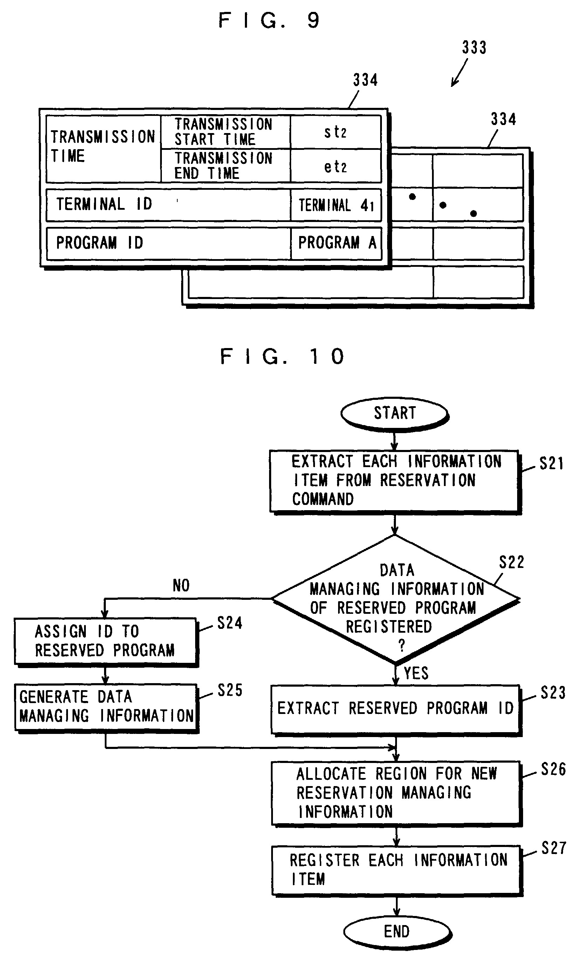

The data managing information 332 is generated not only when the receiving/recording portion 31 receives program data but also when a reservation command from the terminal 4 is inputted to the server managing portion 33 (refer to step S25 of FIG. 10). When input of the reservation command is earlier than receiving of the program data, the data managing information 332 has been registered in the program managing DB 331 when the program data is received. The server managing portion 33 determines after step S1 whether the received program data's managing information 332 has been registered in the program managing DB 331 (step S2). For the determination in step S2, the server managing portion 33 searches the program managing DB 331 for the data managing information 332 which includes the broadcast start time, broadcast end time and broadcast channel matching those extracted in step S1.

When the server managing portion 33 cannot find the data managing information 332 including the same broadcast start time, etc., as a result of the search, the server managing portion 33 newly generates managing information 332 of the program data received this time. The sever managing portion 33 first allocates a region to the new data managing information 332 in the program managing DB 331 (step S3). The server managing portion 33 registers the broadcast start time, broadcast end time and channel ID in the allocated region (step S4). Moreover, in step S4, the total time is obtained from the broadcast start time and broadcast end time and registered as described above.

The server managing portion 33 then assigns a unique program ID and a storage location to the program data received this time. The server managing portion 33 registers the program ID and the storage location in corresponding fields in the region of the new data managing information 332 (step S5). This completes the new data managing information 332. The storage device 32 stores the program data received this time by the receiving/recording portion 31 in the storage location assigned by the server managing portion 33.

The server managing portion 33 may find the data managing information 332 including the same broadcast start time, etc., as a result of the search in step S2. In this case, the server managing portion 33 determines in step S2 that the managing information 332 of the program data has been registered in the program managing DB 331. However, when the data managing information 332 has been registered in step S2, storage location information has not been registered (refer to step S25 of FIG. 10). Therefore, the server managing portion 33 assigns a storage location of the received program data. The server managing portion 33 registers the storage location in the already-existing data managing information 332 (step S6). This completes the data managing information 332. Furthermore, the storage device 32 stores the program data received this time in the assigned storage location.

FIG. 3 shows an example of the data managing information 332, in which "program A" is assigned to one program data as a program ID. The program data is stored in a location "XXXX" in the storage device 32. According to FIG. 3, the program data was broadcast between a broadcast start time "st₁" and a broadcast end time "et₁" (total time "tt₁") through a broadcast channel "Ch₁".

Added to each terminal 4 of FIG. 1 is a terminal ID for specifying each terminal 4. The terminal ID is unique for each terminal 4 connected to the video server 3. That is, the terminal IDs of the terminals 4₁ and 4ₙ are different from each other.

The user of the terminal 4 is previously provided with a schedule of programs broadcast by the program broadcast device 2. The schedule is typically distributed through magazines and newspapers to the user. The user gets to know a broadcast start time, a broadcast end time and a broadcast channel (channel ID) of a desired program referring to the schedule. That is, in the program receiving/storage device 1, the program is uniquely specified by the broadcast start time, broadcast end time and broadcast channel. The user operates the terminal 4 to specify and reserve the desired program. Program reservation is to request the video server 3 to transmit the program data specified by the user to the specified terminal 4 at the specified time.

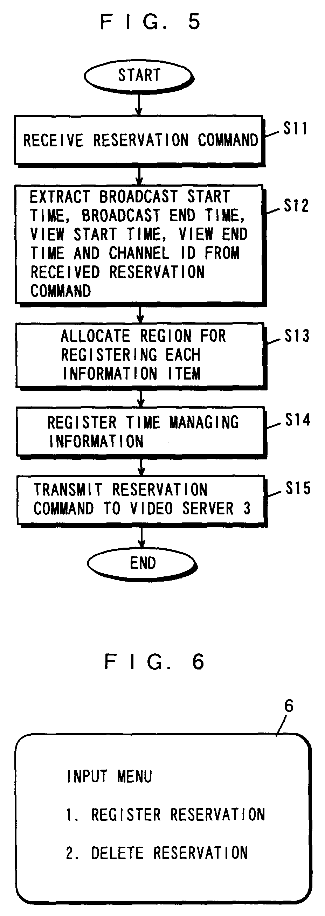

Described next is operation of the terminal 4 when a user reserves a program referring to a flow chart of FIG. 5. The user first operates the input device 41 (typically, a remote controller) capable of operating the terminal 4 to select "1. register reservation" referring to a screen of an input menu 6 (refer to FIG. 6). The user further operates the input device 41 to input a broadcast start time, a broadcast end time and a broadcast channel for one program, thereby specifying the program desired to be reserved. The user further inputs a view start time and a view end time to specify view time of the reserved program.

When the user reserves a program, the program may have been stored in the storage device 32 or may not have been stored yet. However, processing in the video server 3 (described later) allows the user to freely reserve the program regardless of the presence or absence of the program data in the storage device 32. The inputted view start time and view end time shows a time for the video server 3 to start transmitting the reserved program data to the terminal 4 and a time to end transmission. Therefore, the view start time and the view end time are handled in the video server 3 as a transmission start time and a transmission end time.

The input device 41 previously holds the terminal ID of the terminal 4. When the broadcast start time, the broadcast end time, the broadcast channel (channel ID), the view start time and the view end time are inputted, the input device 41 generates a reservation command including the inputted information and its terminal ID. The generated reservation command is transmitted from the input device 41 to a main body of the terminal 4.

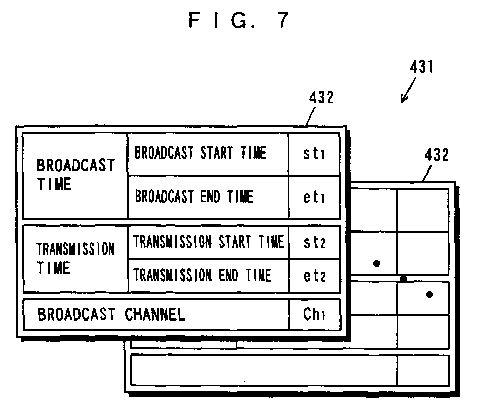

The reservation command is received by the command input portion 42 of the terminal 4 (step S11 of FIG. 5). The command input portion 42 outputs the received reservation command as it is to the terminal managing portion 43. The terminal managing portion 43 generates time managing information 432 for each inputted reservation command and registers the time managing information 432 in a time managing DB 431 (refer to FIG. 7). The time managing DB 431 is a database mainly for managing transmission start time (view start time) of the reserved program. The time managing DB 431 holds, as shown in FIG. 7, several pieces of time managing information 432. The time managing information 432 is generated every time a reservation command is inputted. As the time managing information 432, a broadcast time, a transmission time and a channel ID are registered. As the broadcast time, a broadcast start time and a broadcast end time are registered. As the transmission time, a transmission start time and a transmission end time are registered.

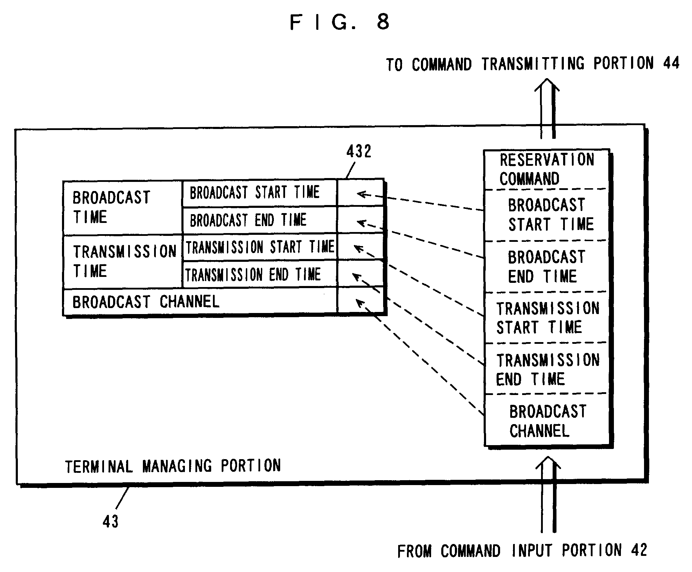

The terminal managing portion 43 extracts the broadcast start time, broadcast end time, view start time, view end time and channel ID from the inputted reservation command in order to generate the above time managing information 432 (step S12). The terminal managing portion 43 then allocates a region to new time managing information 432 in the time managing DB 431 (step S13). The terminal managing portion 43 registers each information item obtained in step S11 in the region allocated in step S12 (step S14). The summary of processing in steps S12 to S14 is shown in FIG. 8. This completes the time managing information 432 for the reservation command inputted this time, which is added to the reservation information DB 431.

FIG. 7 shows an example of the time managing information 432. The example of FIG. 7 shows the time managing information 432 in which a broadcast start time "st₁", a broadcast end time "et₁", a transmission start time (view start time) "st₂" and a transmission end time (view end time) "et₂" are included in the reservation command. This reservation command means that the user desires to watch the program data transmitted from video server 3 between the transmission start time "st₂" and the transmission end time "et₂". Further, the program data is broadcast through a broadcast channel "ch₁".

When the above registration of the above time managing information 432 ends, the terminal managing portion 43 outputs the reservation command inputted this time to the command transmitting portion 44. The command transmitting portion 44 transmits the inputted reservation command through the bus 5 to the video server 3 (step S15).

The reservation command transmitted from the command transmitting portion 44 is received by the command receiving portion 34 of the video server 3. The command receiving portion 34 outputs the received reservation command as it is to the server managing portion 33. The server managing portion 33 registers each information item included in the reservation command in a reservation managing database 333 (hereinafter referred to as reservation managing DB 333) every time a reservation command is inputted to manage program reservation of each terminal 4. The reservation managing DB 333 holds, as shown in FIG. 9, several pieces of reservation managing information 334. The reservation managing information 334 is composed of fields of transmission time, terminal ID and program ID.

As the transmission time, a transmission start time (view start time) and a transmission end time (view end time) are registered. The transmission start time and the transmission end time have been described above. As the terminal ID, an ID of the terminal 4 which transmitted the reservation command is registered. As the program ID, an ID of the program data uniquely specified by each information item in the reservation command.

For example, in the reservation managing information 334 shown in FIG. 9, a transmission start time "st₂", a transmission end time "et₂", a terminal ID "terminal 4₁" and a program ID "program A" are registered. In this case, the program data specified by the "program A" is transmitted to the terminal 4₁. Transmission of the program data starts at the time "st₂" and ends at the time "et₂".

The server managing portion 33 registers the above described reservation managing information 334 in the reservation managing DB 333 for every reservation command to manage the reservation managing information 334 of each terminal 4 connected to the video server 3. Described below is operation of registering the reservation managing information 334 by the server managing portion 33 referring to a flow chart shown in FIG. 10. The server managing portion 33 first extracts the terminal ID, broadcast start time, broadcast end time, channel ID, view start time and view end time included in the inputted reservation command (step S21). The server managing portion 33 determines whether or not the managing information 332 of the program data reserved by the reservation command has already been registered in the program managing DB 331 (step S22). For the determination in step S22, the server managing portion 33 searches the program managing DB 331 for the data managing information 332 which includes the broadcast start time, broadcast end time and broadcast channel (channel ID) matching those obtained in step S21.

When the program data reserved this time has already been stored in the storage device 32, the server managing portion 33 can find the data managing information 332 including the same broadcast start time, etc., as a result of the search. The server managing portion 33 extracts and holds the program ID of the data managing information 332 from the program managing DB 331 (step S23).

On the other hand, it is determined that the data managing information 332 including the same broadcast start time, etc., is not registered as a result of the above search, the program reserved this time is not stored in the storage device 32 at this time. Therefore, the server managing portion 33 cannot obtain the program ID from the data managing information 332. The server managing portion 33 thus assigns an ID to the program reserved this time and holds the ID (step S24).

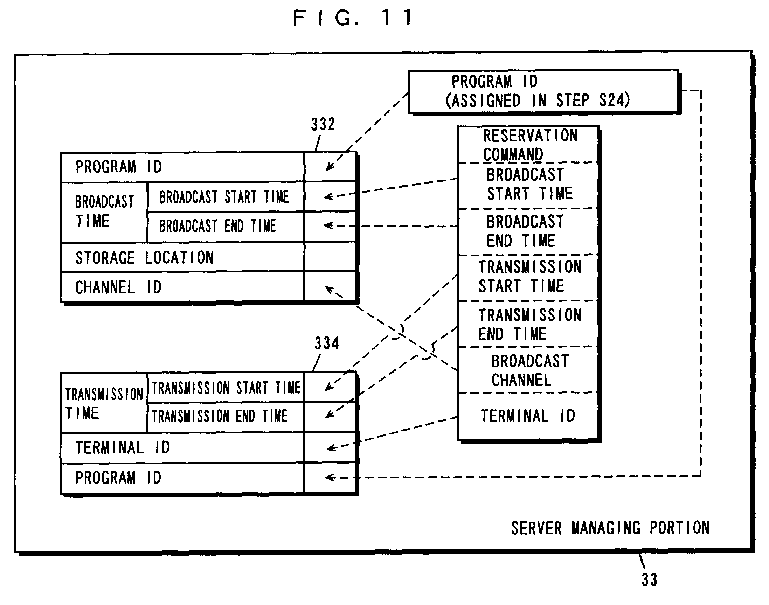

The server managing portion 33 further generates the managing information 332 of the program data not yet stored in the storage device 32 and registers the data managing information 332 in the program managing DB 331 (step S25). Since the procedure of generating the data managing information 332 is the same as that shown in steps S3 to S5 of FIG. 4, its description is omitted herein. Registered in the field of program ID of the generated data managing information 332 is, as shown in FIG. 11, the program ID assigned in step S24. Furthermore, registered as the broadcast time and channel ID (broadcast channel) of the data managing information 332 are those obtained in step S21. However, since storage locations of the program data to be broadcast in the future are not known, the server managing portion 33 does not register anything in the field of the storage location of the generated data managing information 332 and leaves it blank (refer to FIG. 11). The data managing information 332 generated as described above is also added to the program managing DB 331. The field of the storage location in which no storage location is registered at this point will be filled when the program data is actually received by the receiving portion 31 (refer to step S6 of FIG. 4).

After the step S23 or S25, the server managing portion 33 generates new reservation managing information 334 in order to register each information item in the reservation command (that is, the terminal ID, broadcast start time, broadcast end time, channel ID, view start time and view end time) and the program ID. For this purpose, the server managing portion 33 allocates a region to new reservation managing information 334 for registering each information item in the reservation managing DB 333 (step S26). As shown in FIG. 11, the server managing portion 33 registers each information item obtained in step S21 and the program ID obtained in step S23 or S24 in the region of the reservation managing information 334 allocated in step S26 (step S27). FIG. 11 shows a case in which the program ID assigned in step S24 is registered. This completes the reservation managing information 334 of the inputted reservation command, which is added to the reservation managing DB 333. After adding the reservation managing information 334 in the above described manner, the server managing portion 33 ends the processing of FIG. 10.

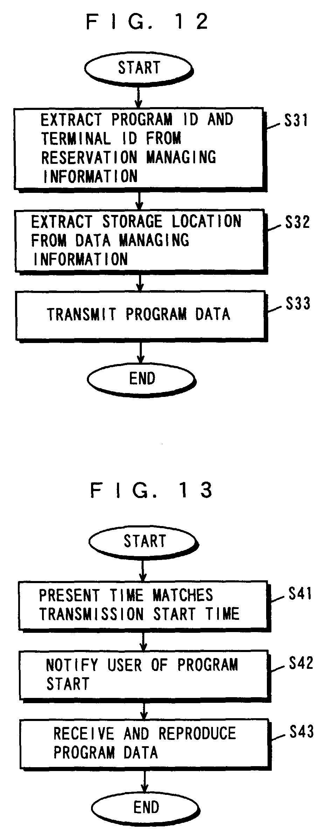

Described next is operation when the server managing portion 33 transmits program data to the terminal 4 referring to a flow chart of FIG. 12. The server managing portion 33 internally detects the present time. When detecting that the transmission start time included in the reservation managing information 334 matches the present time, the server managing portion 33 extracts the program ID and terminal ID of the reservation managing information 334 (step S31). The server managing portion 33 then accesses and searches the program managing DB 331 for the data managing information 332 including the program ID obtained in step S31. The server managing portion 33 extracts the storage location included in the data managing information 332 obtained by the search (step S32). The server managing portion 33 notifies the program transmitting portion 35 of the terminal ID obtained in step S31 and the storage location obtained in step S32 to transmit the program data stored in the storage location to the terminal 4 specified by the terminal ID (step S33).

Described next is operation when the terminal 4 receives program data referring to a flow chart of FIG. 13. The managing portion 43 of the terminal 4 internally detects the present time. When the transmission start time of any of the time managing information 432 matches the present time (step S41), the terminal managing portion 43 determines that it is time for the user to start watching the program. The terminal managing portion 43 instructs the notifying portion 48 to notify the user that the program's view start time has come (step S42). The user notification by the notifying portion 48 is realized by light emission of a light-emitting device or audio output. It is thus possible for the user to know that program starts to be played, improving usability of the program receiving/storage device 1.

The program data transmitted in step S33 is received through the bus 5 by the program receiving portion 45 of the terminal 4. However, the terminal 4 only receives the program data reserved by itself. Connected to the program reproduction processing portion 46 is a television set (not shown). The program reproduction processing portion 46 performs reproduction processing of the program data received by the program receiving portion 45 (step S43). That is, the program reproduction processing portion 46 decodes the program data in a data form applicable to the television set connected thereto and outputs the data to the television set. The television set displays images on a display and outputs audio from a speaker according to the program data outputted from the program reproduction processing portion 46. This allows the user to watch the program data broadcast by the program broadcast device 2 at his/her convenient time.

As described above, according to the present embodiment, the program data simultaneously received by the receiving portion 31 is stored in the storage device 32. Therefore, even if the user does not have a plurality of VCRs, the user can construct a viewing environment according to his/her lifestyle by using the video server 3 and the terminal 4: for example, the user can watch programs in the same time zone, collectively watch programs for one week, and make his/her own program schedule so that only desired programs are transmitted.

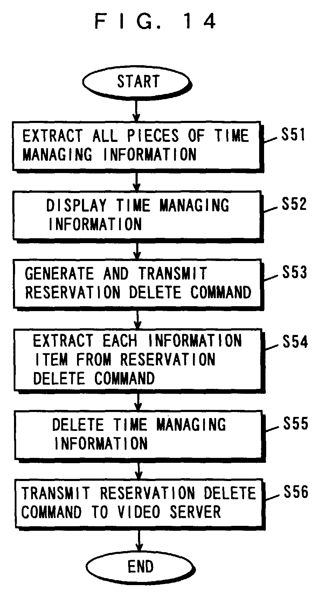

Furthermore, the program receiving/storage device 1 can delete the registered reservation managing information 334 and time managing information 432. Described below is operation when the terminal 4 deletes the time managing information 432 referring to a flow chart of FIG. 14. The user first operates the input device 41 to select "2. delete reservation" on the screen of the input menu 6 (refer to FIG. 6). When "2. delete reservation" is selected, the terminal managing portion 43 accesses the time managing DB 431 to extract all pieces of time managing information 432 currently registered (step S51).

The display processing portion 47 is connected to the television set, as the program reproduction processing portion 46 is. The display processing portion 47 generates a list of pieces of time managing information 432 extracted by the terminal managing portion 43 to make the list displayed on the television set (step S52). This makes all pieces of time managing information 432 on the display of the television set. Each piece of time managing information 432 is composed of the channel ID, broadcast time and transmission time, as described above. Referring to the list displayed on the display, the user operates the input device 41 to specify the time managing information 432 to be deleted. The input device 41 generates a reservation delete command including the broadcast time (that is, broadcast start time and broadcast end time), broadcast channel and transmission time (that is, view start time and view end time) included in the specified time managing information 432, and the ID of the terminal 4. The input device 41 transmits the reservation delete command to the main body of the terminal 4 (step S53).

The reservation delete command is inputted through the command input portion 42 in the main body of the terminal 4 to the terminal managing portion 43. The terminal managing portion 43 extracts the broadcast start time, broadcast end time, view start time, view end time and broadcast channel from the inputted reservation delete command (step S54). The terminal managing portion 43 searches the time managing DB 431 based on the extracted information items. In the time managing DB 431, there exists the time managing information 432 including the broadcast start time, etc., matching those obtained in step S54. The time managing information 432 is specified to be deleted by the user. the terminal managing portion 43 finds and deletes the time managing information 432 to be deleted (step S55). The terminal managing portion 43 transmits the reservation delete command through the command transmitting portion 44 and the bus 5 to the video server 3 (step S56).

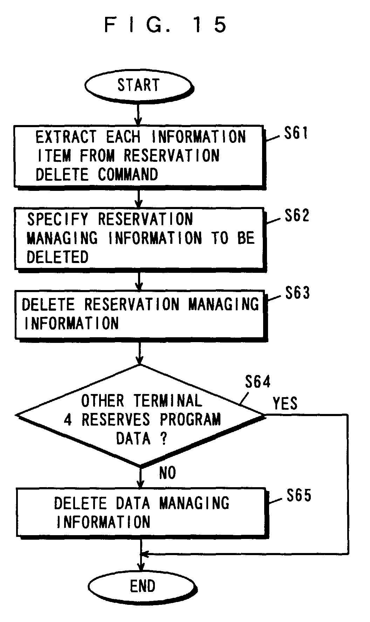

The reservation delete command is inputted through the command receiving portion 34 of the video server 3 to the server managing portion 33. The server managing portion 33 deletes the reservation managing information 334 specified by the reservation delete command from the reservation managing DB 333. Described below is delete operation by the server managing portion 33 referring to a flow chart shown in FIG. 15. The server managing portion 33 first extracts the terminal ID, broadcast start time, broadcast end time, view start time, view end time and broadcast channel from the inputted reservation delete command (step S61). The server managing portion 33 searches the reservation managing DB 333 for pieces of reservation managing information 334 which include the terminal ID matching that obtained in step S61. The server managing portion 33 thus obtains the pieces of reservation managing information 334 of the terminal 4 which transmitted the reservation delete command. The server managing portion 33 further searches the pieces of reservation managing information 334 of the terminal 4 obtained this time for the reservation managing information 334 which includes the broadcast start time, etc., matching those obtained in step S61. The server managing portion 33 thus specifies the reservation managing information 334 specified by the reservation delete command (step S62). The server managing portion 33 then deletes the reservation managing information 334 specified in step S62 from the reservation managing DB 333 (step S63).

The server managing portion 33 extracts and holds the program ID from the reservation managing information 334 deleted this time. The program data specified by the program ID may or may not be reserved by other terminals 4. When the program data is not reserved by other terminals 4, it is not necessary to keep storing the program data in the storage device 32. Therefore, the server managing portion 33 searches the reservation managing DB 333 for the reservation managing information 334 which includes the program ID matching the currently held program ID. That is, the server managing portion 33 determines whether or not other terminal 4 reserves the program data specified by the current delete command (step S64). When finding the reservation managing information 334, the server managing portion 33 does not delete the program data from the storage device 32 and leaves it there.

On the other hand, when not finding the reservation managing information 334, the server managing portion 33 finds the data managing information 332 including the currently held program ID from the program managing DB 331 and deletes it (step S65). This makes the program data specified by the program ID be deleted from the storage device 32. It is thus possible to effectively use the capacity of the storage device 32.

As described above, the program receiving/storage device 1 can delete program reservation by the user as required. This improves usability of the program receiving/storage device 1.

Furthermore, the server managing portion 33 manages timing for deleting the program data stored in the storage device 32. That is, the server managing portion 33 deletes the data managing information 332 when predetermined time has passed from the broadcast start time or when the program data has already been watched by the user, and also deletes the program data specified by the data managing information 332 from the storage device 32 It is thereby possible to always store new program data broadcast from the program broadcast device 2 in the storage device 32.

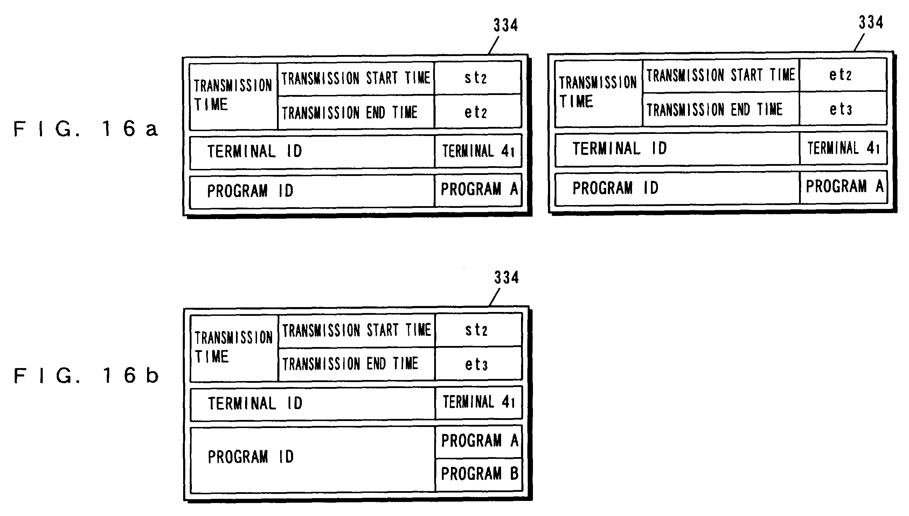

Furthermore, the reservation managing information 334 is generated for each reservation command unit, as described above and shown in FIG. 9. However, in the reservation managing DB 333, there may be a case in which a plurality of sets of program data are successively broadcast to the same terminal 4. That is, for example, as shown in FIG. 16a, the transmission end time of one reservation managing information 334 is "et₂" and the transmission start time of the other reservation managing information 334 is "et₂". In this case, the program data specified by program A and the program data specified by program B are successively broadcast to the same terminal 4. The server managing portion 33 can manage such two pieces of reservation managing information 334 as one, as shown in FIG. 16b. That is, a plurality of pieces of reservation managing information 334 can be handled as one. This allows effective use of the capacity of the reservation managing DB 333.

### (Second embodiment)

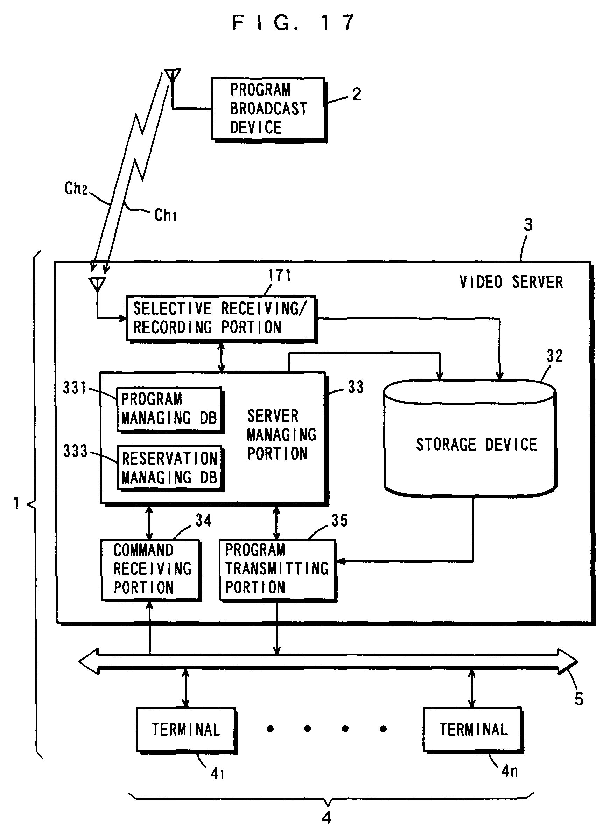

FIG. 17 is a block diagram showing the structure of a program receiving/storage device 1 according to a second embodiment of the present invention. A video server shown in FIG. 17 includes a selective receiving/recording portion 171 instead of the receiving/recording portion 31, which is different compared with that in the program broadcast system shown in FIG. 1. Other than that, the structure is the same, and therefore the same reference numbers are provided for the components in FIG. 17 corresponding to those shown in FIG. 1 and their description is omitted. Mainly described below is the above difference.

The server managing portion 33 generates the program managing DB 331 and the reservation managing DB 333 in the same manner as that in the first embodiment. However, in the present embodiment, the data managing information 332 registered in the program managing DB 331 is generated based on a reservation command only. That is, when program data is received, the data managing information 332 has been completed except that the storage location has not yet been registered. The server managing portion 33 can know when and from which broad channel the program data reserved by the terminal 4 is broadcast, referring to this two types of databases 331 and 332. When the broadcast start time of the reserved program data comes, the server managing portion 33 notifies the selective receiving/recording portion 171 of its channel ID. In response to this notification, the selective receiving/recording portion 171 adjusts its receive frequency band to the frequency band of the broadcast channel (channel ID), selectively receives only the reserved program data among the program data to be broadcast by the program broadcast device 2 and stores the received program data in the storage device 32. When the broadcast end time of the reserved program data comes, the server managing portion 33 further notifies the selective receiving/recording portion 171 of its channel ID. In response to this notification, the selective receiving/recording portion 181 ends receiving of the program data.

As is evident from the above description, according to the second embodiment, the terminal 4 has to request transmission reservation before the broadcast start time of the program data, while it is possible to effectively use the capacity of the storage device 32 when a program broadcast system is structured using the storage device 32 with limited capacity.

### (Third embodiment)

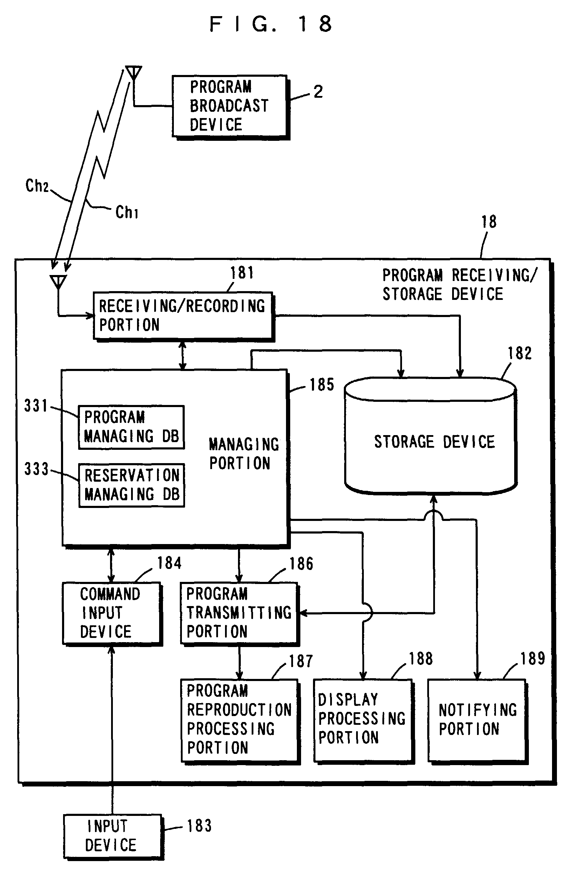

FIG. 18 is a block diagram showing the whole structure of a program receiving/storage device 18 according to a third embodiment of the present invention. In FIG. 18, a program broadcast device 2 is placed remote from the program receiving/storage device 18. Since the program broadcast device 2 is the same as that in the first embodiment, its description is omitted.

The program receiving/storage device 18 is typically placed in human-living space such as home and office. The program receiving/storage device 18 includes a receiving/recording portion 181, a storage device 182, an input device 183, a command input portion 184, a managing portion 185, a program transmitting portion 186, a program reproduction processing portion 187, a display processing portion 188 and a notifying portion 189.

The program data as described above is broadcast to the program receiving/storage device 18. The receiving /recording portion 181 of the program receiving/storage device 18 is so structured as the receiving/recording portion 31 of FIG. 1, receiving all sets of program data broadcast by the program broadcast device 2. The managing portion 185 generates the data managing information 332 every time the receiving/recording portion 181 receives program data and registers the data managing information 332 in the program managing DB 331. Since the program managing DB 331 and the data managing information 332 have already been described in detail referring to FIG. 3, their description is omitted herein. The managing portion 185 then operates according to the procedures shown in the flow chart of FIG. 4 to generate the data managing information 332. Since the processing of FIG. 4 has been described in the first embodiment, the description below is simplified. The managing portion 185 extracts the broadcast start time, broadcast end time and channel ID added to the received program data (step S1).

As in the first embodiment, the data managing information 332 is generated when the receiving/recording portion 181 receives program data or when a reservation command is inputted (refer to step S25 of FIG. 10). Because of this, the data managing information 332 may have been registered when the program data is received. Therefore, the managing portion 185 determines after step S1 whether or not the managing information 332 of the received program data has been registered (step S2). When the managing information 332 of the received program data has not been registered, the managing portion 185 newly generates the managing information 332 of the program data received this time (steps S3 to S5). The storage device 182 stores the program data received by the receiving/recording portion 181 this time in the storage location allocated by the managing portion 185.

When it is determined in step S2 that the managing information 332 of the received program data has been registered, the managing portion 185 registers the storage location allocated to the program data in the existing data managing information 332 (step S6). The storage device 182 stores the program data received this time in the allocated storage location. The above processing of FIG. 4 generates the data managing information 332 shown in FIG. 3.

Referring to the schedule, as described in the first embodiment, the user of the program receiving/storage device 18 specifies and reserves a desired program. In the third embodiment, program reservation is to request the program receiving/storage device 18 to reproduce the program data specified by the user at a specified time.

Described next is processing by the program receiving/storage device 18 at program reservation. The user operates the input device 183 capable of operating the program receiving/storage device 18 to input a broadcast start time, a broadcast end time and a broadcast channel for one program, thereby specifying the program to be reserved. The user further inputs a view start time and a view end time to specify view time of the reserved program. The input device 183 generates a reservation command based on the information inputted by the user, and the reservation command is transmitted through the command input portion 184 of the program receiving/storage device 18 to the managing portion 185.

The managing portion 185 generates the reservation managing information 334 based on the inputted reservation command and registers the reservation managing information 334 in the reservation managing DB 333. Since the reservation managing DB 333 and the data managing information 334 have already been described in detail referring to FIG. 9, their description is omitted herein. However, it is noted that the terminal ID shown in FIG. 9 is not required for the program receiving/storage device 18 of the third embodiment, because the program receiving/storage device 18 does not transmit the program data to a plurality of terminals 4, unlike the program receiving/storage device 1.

The managing portion 185 registers the reservation managing information 334 in the reservation managing DB 333 for each reservation command to manage program reservation. Described below is operation of registering the reservation managing information 334 by the managing portion 185 referring to the flow chart in FIG. 10. Since the processing of FIG. 10 has been described in detail in the first embodiment, its description below is simplified. The managing portion 185 extracts the broadcast start time, broadcast end time, channel ID, view start time and view end time included in the inputted reservation command (step S21). The managing portion 185 determines whether the data managing information 332 of the reserved program has already been registered in the program managing DB 331 (step S22).

When the data managing information 332 of the reserved program has been registered, the managing portion 185 extracts the program data ID from the program managing DB 331 and holds the ID (step S23). On the other hand, when the data managing information 332 of the reserved program has not been registered, the managing portion 185 cannot obtain the program ID from the data managing information 332, and therefore assigns an ID to the currently-reserved program and holds the ID (step S24).

The managing portion 185 further generates the managing information 332 of program data not yet stored in the storage device 182 and registers the managing information 332 in the program managing DB 331 (step S25). The procedure of generating the data managing information 332 is the same as that in steps S3 to S5 of FIG. 4 and therefore its description is omitted herein.

After step S23 or S25, the managing portion 185 generates, as shown in FIG. 11, new reservation managing information 334 for registering each information item in the reservation command (that is, the terminal ID, broadcast start time, broadcast end time, channel ID, view start time and view end time) and the program ID (steps S26, S27). The procedure of generating the reservation managing information 334 has been described in the first embodiment, and therefore its description is omitted. After adding the reservation managing information 334 in the above described manner, the managing portion 185 ends the processing of FIG. 10.

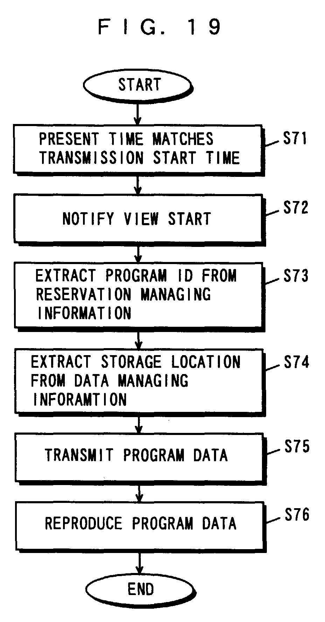

Described next is processing when the program receiving/storage device 18 reproduces program data referring to a flow chart of FIG. 19. The managing portion 185 internally detects the present time, and when the transmission start time of any of the reservation managing information 334 matches the present time (step S71), the managing portion 185 determines that it is time for the user to start watching the program. The managing portion 185 instructs the notifying portion 189 to notify the user that the view start time of the program has come (step S72).

The managing portion 185 then extracts the program ID of the reservation managing information 334 whose transmission start time matches the present time (step S73). The managing portion 185 next accesses and searches the program managing DB 331 for the data managing information 332 including the program ID obtained in step S73. The managing portion 185 extracts the storage location from the data managing information 332 obtained by the search (step S74). The managing portion 185 notifies the program transmitting portion 186 of the program ID obtained in step S73 and the storage location obtained in step S74 to make the program reproduction processing portion 187 transmit the program data stored in the storage location (step S75). Connected to the program reproduction processing portion 187 is a television set (not shown). The program reproduction processing portion 187 performs reproduction processing of the received program data (step S76). This makes the program subjected to reproduction processing by the program reproduction processing portion 187 reproduced in the television set. It is thus possible for the user to view the program data broadcast from the program broadcast device 2 at his/her convenient time.

As described above, according to the third embodiment, as in the first embodiment, the user can construct a viewing environment according to his/her lifestyle: for example, the user can watch programs in the same time zone, collectively watch programs for one week, and make his/her own program schedule so that only desired programs are transmitted. Further, the program receiving/storage device 18 has a structure in which the video server 3 and the terminal 4 in the program receiving/storage device 1 are combined. Therefore, the program receiving/storage device 18 can be downsized compared with the program receiving/storage device 1. Accordingly, the program receiving/storage device 18 can also be manufactured at low cost.

Furthermore, the program receiving/storage device 18 operates according to the procedure shown in the flow chart of FIG. 2, thereby also capable of deleting the registered reservation managing information 334. The user first operates the input device 183 to select "2. delete reservation" on the screen of the input menu 6 (refer to FIG. 6). When the "2. delete reservation " is selected, the managing portion 185 accesses the reservation managing DB 333 and extracts all pieces of reservation managing information 334 currently registered (step S81).

Like the program reproduction processing portion 187, the display processing portion 188 is connected to the television set. The display processing portion 188 generates a list of pieces of reservation managing information 334 extracted by the managing portion 185 to display on the television set (step S82). Referring to the list displayed on the display, the user operates the input device 183 to specify the time managing information 432 to be deleted. The input device 183 generates and transmits a reservation delete command including the broadcast time (that is, broadcast start time and broadcast end time), broadcast channel, transmission time (that is, view start time and view end time) included in the specified reservation managing information 334 (step S83).

The reservation delete command is inputted through the command input portion 184 to the managing portion 185. The managing portion 185 deletes the reservation managing information 334 specified by the reservation delete command from the reservation managing DB 333 (step S84). The specific processing in step S84 is the same as that in steps S61 to S63, and therefore its description is omitted. As described above, the program receiving/storage device 18 can delete program reservation by the user as required. This improves usability of the program receiving/storage device 18.

Furthermore, like the server managing portion 33 of FIG. 1, the managing portion 185 manages timing for deleting the program data stored in the storage device 32. Still further, the managing portion 185 may manage a plurality of pieces of reservation managing information 334 as one, like the server managing portion 33 as shown in FIG. 16.

The receiving/recording portion 181 of FIG. 18 is preferably capable of selectively receiving only the program data reserved by the reservation command among sets of program data to be broadcast. This is because the program receiving/storage device 18 can be downsized as described above, while space for placing the storage device 182 is limited, thereby limiting the capacity of the storage device 182. Selectively receiving program data allows the amount of program data stored in the storage device 182 to be made small, which is convenient for the storage device 182 with small capacity.

While the invention has been described in detail, the foregoing description is in all aspects illustrative and not restrictive. It is understood that numerous other modifications and variations can be devised without departing from the scope of the invention.

## Claims

1. A program receiving/storage device for receiving and storing program data continuously broadcast from a remote program broadcast device, comprising:
a server (3); and
a terminal (4) for transmitting a reservation command specifying a set of program data and a view time according to an input from a user;
said server comprising:
a receiving portion (31, 171) for receiving the program data broadcast from said program broadcast device;
a storage device (32) for storing the program data received by said receiving portion (31, 171);
a server managing portion (33) for managing data managing information of the program data stored by said storage device (32) and reservation managing information generated based on the reservation command transmitted from said terminal; and
a program transmitting portion (35) for transmitting the specified program data stored in said storage device to said terminal according to an instruction of said server managing portion (33); wherein
said server managing portion (33) instructs, based on the data managing information and the reservation managing information managed thereby, said program transmitting portion (35) to retrieve the specified program data from said storage device (32) and transmit the program data to said terminal (4); and
said terminal (4) receives the specified program data transmitted by said program transmitting portion (35) and performing reproduction processing of the received program data.

2. The program receiving/storage device according to claim 1, wherein
said receiving portion (171) further selectively receives only the program data specified by the reservation command by said terminal (4) among the program data broadcast from said program broadcast device.

3. The program receiving/storage device according to claim 1, wherein
said server managing portion (33) further deletes the program data stored in said storage device (32) as required.

4. The program receiving/storage device according to claim 2, wherein
said server managing portion (33) further deletes the program data stored in said storage device (32) as required.

5. The program receiving/storage device according to claim 1, wherein
said terminal (4) comprises:
a terminal managing portion (43) for managing the view time specified by the reservation command generated by the terminal; and
a notifying portion (48) for notifying the user that said server starts transmitting the specified program data at the view time managed by said terminal managing portion.

6. The program receiving/storage device according to claim 2, wherein
said terminal (4) comprises:
a terminal managing portion (43) for managing the view time specified by the reservation command generated by the terminal; and
a notifying portion (48) for notifying the user that said server starts transmitting the specified program data at the view time managed by said terminal managing portion.

7. The program receiving/storage device according to claim 3, wherein
said terminal (4) comprises:
a terminal managing portion (43) for managing the view time specified by the reservation command generated by the terminal; and
a notifying portion (48) for notifying the user that said server starts transmitting the specified program data at the view time managed by said terminal managing portion.

8. The program receiving/storage device according to claim 4, wherein
said terminal (4) comprises:
a terminal managing portion (43) for managing the view time specified by the reservation command generated by the terminal; and
a notifying portion (48) for notifying the user that said server starts transmitting the program data at the view time managed by said terminal managing portion.

9. The program receiving/storage device according to claim 5, wherein
said terminal (4) further comprises a display processing portion (47) for performing display processing of the view time managed by said terminal managing portion and making the user refer to the view time.

10. The program receiving/storage device according to claim 5, wherein
said server managing portion (33) further deletes the reservation managing information managed thereby as required.

11. A program receiving/storage device (18) receiving and storing program data continuously broadcast from a remote program broadcast device, comprising:
an input device (183) for generating a reservation command specifying a set of program data and a view time according to an input from a user;
a receiving portion (181) for receiving the program data broadcast by said program broadcast device;
a storage device (182) for storing the program data received by said receiving portion (181);
a managing portion (185) for managing data managing information of the program data stored by said storage device (182) and reservation managing information generated based on the reservation command of said input device; and
a program reproduction processing portion (187) for retrieving the specified program data stored in said storage device according to an instruction of said managing portion (185) and performing reproduction processing of the retrieved program data; wherein
said managing portion (185) instructs, based on the data managing information and reservation managing information managed thereby, said program reproduction processing portion (187) to retrieve the specified program data from said storage device (182).

12. The program receiving/storage device according to claim 11, wherein
said receiving portion (181) further selectively receives only the program data specified by the reservation command by said input device among the program data broadcast from said program broadcast device.

13. The program receiving/storage device according to claim 11, wherein
said managing portion (185) further deletes the program data stored in said storage device (182) as required.

14. The program receiving/storage device according to claim 12, wherein
said managing portion (185) further deletes the program data stored in said storage device (182) as required.

15. The program receiving/storage device according to claim 11, further comprising:
a notifying portion (189) for notifying the user that said program reproduction processing portion (187) starts reproduction processing of the specified program data.

16. The program receiving/storage device according to claim 12, further comprising:
a notifying portion (189) for notifying the user that said program reproduction processing portion (187) starts reproduction processing of the specified program data.

17. The program receiving/storage device according to claim 13, further comprising:
a notifying portion (189) for notifying the user that said program reproduction processing portion (187) starts reproduction processing of the specified program data.

18. The program receiving/storage device according to claim 11, wherein
said managing portion (185) further deletes the reservation managing information managed thereby as required.

19. The program receiving/storage device according to claim 12, wherein
said managing portion (185) further deletes the reservation managing information managed thereby as required.

20. The program receiving/storage device according to claim 13, wherein
said managing portion (185) further deletes the reservation managing information managed thereby as required.
